(19) Europäisches Patentamt
European Patent Office
Office européen des brevets

(11) **EP 4 614 608 A1**

(12) **EUROPEAN PATENT APPLICATION**
published in accordance with Art. 153(4) EPC

(43) Date of publication:
**10.09.2025 Bulletin 2025/37**

(21) Application number: **23885730.4**

(22) Date of filing: **30.10.2023**

(51) International Patent Classification (IPC):
**H01M 4/525** (2010.01)   **H01M 4/505** (2010.01)
**H01M 10/0525** (2010.01)

(52) Cooperative Patent Classification (CPC):
**C01B 35/12; H01M 4/505; H01M 4/525;**
**H01M 10/0525; Y02E 60/10**

(86) International application number:
**PCT/JP2023/039138**

(87) International publication number:
**WO 2024/095976 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 JP 2022175165**

(71) Applicant: **SUMITOMO METAL MINING CO., LTD.
Tokyo
105-8716 (JP)**

(72) Inventors:
• **KOSHIKA, Yuki
Niihama-shi, Ehime 792-0002 (JP)**
• **KAWAZOE, Takuya
Niihama-shi, Ehime 792-0002 (JP)**

(74) Representative: **Jones, Nicholas Andrew
Withers & Rogers LLP
2 London Bridge
London SE1 9RA (GB)**

(54) **POSITIVE ELECTRODE ACTIVE MATERIAL FOR LITHIUM ION SECONDARY BATTERY, AND LITHIUM ION SECONDARY BATTERY**

(57)   A positive electrode active material for a lithium-ion secondary battery includes a lithium nickel complex oxide having a hexagonal crystalline layered structure and containing secondary particles in which a plurality of primary particles are aggregated. The lithium nickel complex oxide contains Li, Ni, B, and element M (M) at a ratio by mole of Li:Ni:B:M=a:b:c:d (where $0.95 \leq a \leq 1.10$, $0.50 \leq b < 1.00$, $0.00 < c \leq 0.03$, $0.00 \leq d \leq 0.47$, $b+c+d=1$, and element M is at least one element selected from the group consisting of Mn, Co, V, Mg, Mo, Ca, Cr, Zr, Ta, Ti, Nb, Na, W, Fe, Zn, Si, Sn, Cu, P, and Al). A ratio of a B content ratio to a C content ratio as calculated from an XPS measurement result is 0.8 or more and 30.0 or less.

## Description

TECHNICAL FIELD

The present invention relates to a positive electrode active material for a lithium-ion secondary battery, and a lithium-ion secondary battery.

BACKGROUND ART

In recent years, with the growing popularity of portable electronic devices, such as mobile phones, laptop computers, and the like, it is strongly desired to develop small and lightweight secondary batteries having high energy density and durability. Also, it is strongly desired to develop high-output secondary batteries as batteries for power tools and electric vehicles, such as hybrid vehicles. Further, in addition to the required characteristics described above, there has been a growing demand for a highly durable secondary battery that is not appreciably degraded even after repeated use.

A lithium-ion secondary battery is one type of secondary battery that satisfies such a requirement. The lithium-ion secondary battery is formed of a negative electrode, a positive electrode, an electrolyte, and the like, and active materials used in the negative electrode and the positive electrode are materials that enable intercalation and deintercalation of lithium. The lithium-ion secondary battery has high energy density, output characteristics, and durability, as described above.

Research and development of the lithium-ion secondary battery are actively being conducted at present. Among others, a lithium-ion secondary battery using a layered or spinel-type lithium metal complex oxide as a positive electrode material can achieve a voltage as high as substantially 4 V, and thus is increasingly being put into practice as a battery with high energy density.

As a positive electrode material of a lithium-ion secondary battery, lithium metal complex oxides are proposed. Examples of the lithium metal complex oxides include, for example: lithium cobalt complex oxide ($LiCoO_2$) that is relatively readily synthesized; lithium nickel complex oxide ($LiNiO_2$) and lithium nickel cobalt manganese complex oxide ($LiNi_{1/3}Co_{1/3}Mn_{1/3}O2$) each using nickel that is more inexpensive than cobalt; and lithium manganese complex oxide ($LiMn_2O_4$) and lithium nickel manganese complex oxide ($LiNi_{0.5}Mn_{0.5}O_2$) each using manganese.

In recent years, further improvement in battery characteristics is required for lithium-ion secondary batteries. For example, improvement in cycle characteristics (e.g., Patent Document 1), an increase in output, and the like have been studied.

RELATED ART DOCUMENTS

PATENT DOCUMENTS

Patent Document 1: Japanese Unexamined Patent Application Publication No. 2016-189320

SUMMARY OF THE INVENTION

PROBLEMS TO BE SOLVED BY THE INVENTION

In recent years, there has been a need for a positive electrode active material for a lithium-ion secondary battery capable of reducing reaction resistance when used in the lithium-ion secondary battery.

In view of the above issues of the related art, in one aspect of the present invention, it is an object to provide a positive electrode active material for a lithium-ion secondary battery capable of reducing reaction resistance when used in the lithium-ion secondary battery.

MEANS FOR SOLVING THE PROBLEMS

In order to address the above issues, the present invention provides, in one aspect, a positive electrode active material for a lithium-ion secondary battery. The positive electrode active material for the lithium-ion secondary battery includes a lithium nickel complex oxide having a hexagonal crystalline layered structure and containing secondary particles in which a plurality of primary particles are aggregated. The lithium nickel complex oxide contains lithium (Li), nickel (Ni), boron (B), and element M (M) at a ratio by mole of Li:Ni:B:M=a:b:c:d (where $0.95 \leq a \leq 1.10$, $0.50 \leq b < 1.00$, $0.00 < c \leq 0.03$, $0.00 \leq d \leq 0.47$, b+c+d=1, and element M is at least one element selected from the group consisting of Mn, Co, V, Mg, Mo, Ca, Cr, Zr, Ta, Ti, Nb, Na, W, Fe, Zn, Si, Sn, Cu, P, and Al). A ratio of a B content ratio to a C content ratio is 0.8 or more and 30.0 or less. The C content ratio is a ratio of an amount by mole of carbon with respect to a total amount by mole that is a sum of amounts by moles of lithium, nickel, boron, element M, and carbon in a surface as calculated from an XPS measurement result of the positive electrode active material for the lithium-ion secondary battery. The B content ratio is a ratio of an amount by mole of boron with respect to the total amount by mole.

ADVANTAGEOUS EFFECTS OF THE INVENTION

According to one aspect of the present invention, it is possible to provide a positive electrode active material for a lithium-ion secondary battery capable of reducing reaction resistance when used in the lithium-ion secondary battery.

BRIEF DESCRIPTION OF THE DRAWINGS

[FIG. 1] FIG. 1 is an explanatory diagram of a coin-type battery produced in examples and comparative examples.
[FIG. 2A] FIG. 2A is a measurement example of impedance evaluation.
[FIG. 2B] FIG. 2B is a schematic explanatory diagram of an equivalent circuit used for analysis of impedance evaluation.

DETAILED DESCRIPTION OF THE INVENTION

Hereinafter, embodiments of the present invention will be described with reference to the drawings. However, the present invention is not limited to the embodiments below, and various modifications and substitutions can be made thereto without departing from the scope of the present invention.

[Positive Electrode Active Material for Lithium-Ion Secondary Battery]

Hereinafter, a positive electrode active material for a lithium-ion secondary battery of the present embodiment (hereinafter also referred to simply as "positive electrode active material") will be described.

(1) Regarding Lithium Nickel Complex Oxide

The positive electrode active material of the present embodiment contains a lithium nickel complex oxide. The positive electrode active material of the present embodiment may consist of the lithium nickel complex oxide. In this case, however, the positive electrode active material containing unavoidable impurities included in the production process and the like is not excluded.

(1-1) Regarding Composition

The lithium nickel complex oxide can contain lithium (Li), nickel (Ni), and boron (B).
The lithium nickel complex oxide can also contain an element other than lithium, nickel, and boron. For example, the lithium nickel complex oxide can contain element M described below.
Preferably, the lithium nickel complex oxide contains lithium (Li), nickel (Ni), boron (B), and element M (M) at a ratio by mole of Li:Ni:B:M=a:b:c:d.
Preferably, a, b, c, and d satisfy $0.95 \leq a \leq 1.10$, $0.50 \leq b < 1.00$, $0.00 < c \leq 0.03$, $0.00 \leq d \leq 0.47$, and $b+c+d=1$. Also, preferably, element M is at least one element selected from the group consisting of Mn, Co, V, Mg, Mo, Ca, Cr, Zr, Ta, Ti, Nb, Na, W, Fe, Zn, Si, Sn, Cu, P, and Al.
The lithium nickel complex oxide can be represented, for example, by general formula: $Li_aNi_bB_cM_dO_{2+\alpha}$. Because a, b, c, d, and element M in the above general formula have already been described, description thereof is omitted here. Preferably, $\alpha$ satisfies, for example, $-0.2 \leq \alpha \leq 0.2$.

(Nickel (Ni))

In the lithium nickel complex oxide, as the content ratio of nickel becomes higher, the capacity can be increased when it is used as a positive electrode material for a lithium-ion secondary battery.
As described above, b indicating the content ratio of nickel is preferably 0.50 or greater, more preferably 0.60 or greater, further preferably 0.70 or greater, and particularly preferably 0.80 or greater.
As described above, the upper limit of b indicating the content ratio of nickel is preferably less than 1.00, and more preferably 0.97 or less.

(Boron (B))

As described above, the lithium nickel complex oxide of the present embodiment can contain boron. According to the studies conducted by the inventors of the present invention, inclusion of boron in the lithium nickel complex oxide can reduce reaction resistance when it is used in the lithium-ion secondary battery.

Although the exact mechanism by which reaction resistance can be reduced is not clear, it is considered that the boron contained in the lithium nickel complex oxide forms a reaction product having low resistance with the lithium components attached to the surfaces of particles of the lithium nickel complex oxide. Therefore, it is considered that reaction resistance can be reduced because resistance due to intercalation and deintercalation of lithium is reduced on the surfaces of particles of the lithium nickel complex oxide.

As described above, c indicating the content ratio of boron is preferably greater than 0.00, more preferably 0.001 or greater, further preferably 0.002 or greater, and particularly preferably 0.003 or greater.

No particular limitation is imposed on the upper limit of c indicating the content ratio of boron. However, the upper limit of c is preferably 0.03 or less, more preferably 0.025 or less, and particularly preferably 0.02 or less. This is because it is considered that even if an excessive amount of boron is added, the effect commensurate with the addition could not be obtained.

(Element M)

As described above, the lithium nickel complex oxide of the present embodiment can contain element M as an optional component. A group of elements that are suitably used as element M has already been described, and thus description thereof is omitted here. In particular, from the viewpoint of enhancing thermal stability of the lithium nickel complex oxide, e.g., suppressing thermal decomposition of the lithium nickel complex oxide, it is preferable to contain at least one selected from cobalt (Co), manganese (Mn), and titanium (Ti) as element M.

Element M is an optional component. Thus, d indicating the content ratio of element M is preferably 0.00 or greater as described above, more preferably 0.05 or greater, and more preferably 0.10 or greater.

The upper limit of d indicating the content ratio of element M is preferably 0.47 or less as described above, more preferably 0.25 or less, and further preferably 0.20 or less.

When the lithium nickel complex oxide contains a plurality of types of element M, it is preferable that the total content ratio of the plurality of types of element M satisfies the above-described range.

As described below, the lithium nickel complex oxide also contains carbon. However, the lithium nickel complex oxide contains a very small amount of carbon as unavoidable impurities, and thus this carbon is not included, for example, in the general formula of the lithium nickel complex oxide.

(1-2) Regarding Crystal Structure

The lithium nickel complex oxide preferably has a hexagonal crystalline layered structure. By virtue of the hexagonal crystalline layered structure of the lithium nickel complex oxide, lithium can be readily intercalated and deintercalated between layers, thereby especially enhancing output characteristics and cycle characteristics when it is applied to a lithium-ion secondary battery.

The crystal structure of the lithium nickel complex oxide can be confirmed through Rietveld analysis.

(1-3) Regarding Form of Particles

The particles of the lithium nickel complex oxide can contain secondary particles in which a plurality of primary particles are aggregated.

The lithium nickel complex oxide may contain primary particles that are not aggregated, in addition to the secondary particles. That is, the lithium nickel complex oxide can contain both the primary particles and the secondary particles.

(2) Regarding B Content Ratio and C Content Ratio

As described above, inclusion of boron in the lithium nickel complex oxide can reduce reaction resistance when it is used in a lithium-ion secondary battery.

It is considered that the boron contained in the lithium nickel complex oxide forms a reaction product having low resistance with the lithium components attached to the surfaces of particles of the lithium nickel complex oxide. Therefore, it is inferred that formation of impurities, such as lithium carbonate and the like, which cause increase in resistance, is suppressed on the surfaces of particles of the lithium nickel complex oxide, and thus reaction resistance can be reduced.

When XPS (X-ray Photoelectron Spectroscopy) measurement is performed on the positive electrode active material of the present embodiment, the types, abundance, and the like of elements present in the surface layers of the particles of the lithium nickel complex oxide contained in the positive electrode active material can be evaluated.

In order to increase the effect of reducing the reaction resistance, when the XPS measurement is performed on the positive electrode active material of the present embodiment, preferably, the content ratio of boron (B) is high, and the content ratio of carbon (C) derived from lithium carbonate and the like, which cause increase in resistance, is reduced.

The C content ratio is defined as a ratio of an amount by mole of carbon (C) with respect to the total amount by mole that is the sum of amounts by moles of lithium (Li), nickel (Ni), boron (B), element M, and carbon (C) in a surface as calculated from an XPS measurement result of the positive electrode active material of the present embodiment. Also, the B content ratio is defined as a ratio of an amount by mole of boron (B) to the above total amount by mole as calculated from the XPS measurement result of the positive electrode active material of the present embodiment.

In the above case, a ratio of the B content ratio to the C content ratio is preferably 0.8 or more, more preferably 1.0 or more, further preferably 2.0 or more, and particularly preferably 2.5 or more.

By setting the ratio of the B content ratio to the C content ratio to 0.8 or more, it is considered that the ratios of components, such as lithium carbonate and the like, which cause increase in resistance, are reduced, and the ratio of the boron-containing compound that contributes to reduction in resistance is increased. Therefore, the reaction resistance can be especially reduced when used in a lithium-ion secondary battery.

However, in order to excessively increase the ratio of the B content ratio to the C content ratio, it is necessary to increase the content of boron, and reduce the contents of the other elements, such as nickel and element M, in the lithium nickel complex oxide. Also, in order to suppress inclusion of lithium carbonate and the like, it is necessary to, for example, perform washing with water for a long time, and accurately control the atmosphere during thermal treatment. This causes degradation in battery characteristics and increase in cost.

Therefore, the ratio of the B content ratio to the C content ratio is preferably 30.0 or less, more preferably 15.0 or less, further preferably 10.0 or less, and particularly preferably 8.0 or less.

The C content ratio is preferably smaller, for example, preferably 30% or less, and more preferably 20% or less. When the C content ratio is 30% or less, it is possible to sufficiently reduce the contents of compounds that cause increase in resistance, such as lithium carbonate and the like, contained in the surface layers of the particles of the lithium nickel complex oxide. Therefore, the reaction resistance can be especially reduced when used in a lithium-ion secondary battery.

No particular limitation is imposed on the lower limit of the C content ratio, and the lower limit is preferably 0 or more, more preferably 5% or more, and further preferably 10% or more.

The B content ratio and the C content ratio can be measured and calculated in accordance with the following procedure. First, XPS measurement is performed on the positive electrode active material. Then, from semi-quantitative values calculated from the peak areas of the spectra of lithium (Li), nickel (Ni), boron (B), element M, and carbon (C) obtained through XPS measurement, the ratios of amounts by moles of the respective components in the surface of the positive electrode active material are obtained. The peaks used to determine the ratios of amounts by moles of the respective components can be selected in accordance with the elements and the like. For example, after performing peak separation of the measured XPS spectra, the peak having the highest intensity can be used.

Next, the C content ratio, the B content ratio, and the ratio of the B content ratio to the C content ratio can be calculated using the results of the above compositional analysis according to the following formulae (1), (2), and (3). In the formulae, MLi, MC, MNi, MB, and MM mean the ratio of the amount by mole of lithium, the ratio of the amount by mole of carbon, the ratio of the amount by mole of nickel, the ratio of the amount by mole of boron, and the ratio of the amount by mole of element M, respectively, as calculated from the results of XPS measurement.

$$(C\ Content\ Ratio) = [MC \div (MLi + MNi + MB + MM + MC)] \times 100 \quad \dots (1)$$

$$(B\ Content\ Ratio) = [MB \div (MLi + MNi + MB + MM + MC)] \times 100 \quad \dots (2)$$

(Ratio of B Content Ratio to C Content Ratio)=(B Content Ratio)÷ (C Content Ratio) ... (3)                    (3)

(3) Regarding Titration Curve

In a titration curve obtained from neutralization titration performed on a filtrate obtained through filtration of a mixture of the positive electrode active material of the present embodiment with pure water, a volume ratio of an HCl dropping amount in a range having a pH of 5.0 or higher and lower than 8.0 to an HCl dropping amount in a range having a pH of 8.0 or higher and 11.0 or lower is preferably 0.5 or less.

The filtrate used for the preparation of the titration curve can be a filtrate obtained by adding 10 g of the positive electrode active material of the present embodiment to 50 mL of pure water, and stirring the positive electrode active material in the pure water for 5 minutes, followed by filtration and solid-liquid separation. The pure water is preferably water from which components that would influence the neutralization titration are removed as much as possible, and distilled water or the like is suitably used. Also, when preparing the titration curve, 1.0M, **i.e.,** 1.0 mol/dm$^3$ (1.0 mol/L) hydrochloric acid can be used as hydrochloric acid (HCl), which is an acid for the neutralization titration of the filtrate after the filtration.

According to the studies conducted by the inventors of the present invention, the HCl dropping amount in a range having a pH of 5.0 or higher and lower than 8.0 in the above titration curve means HCl consumed mainly in a reaction with lithium carbonate contained in the positive electrode active material.

When the neutralization titration is performed on the filtrate of the positive electrode active material of the present embodiment, the obtained titration curve includes, in a range having a pH of 8.0 or higher and 11.0 or lower, a region that is substantially flat because a change in the pH is suppressed compared to that in the other pH ranges. Specifically, for example, the obtained titration curve includes, in a range having a pH of 8.0 or higher and 11.0 or lower, a region in which a change in the pH over the HCl dropping amount becomes smaller than that in a range having a pH of 5.0 or higher and lower than 8.0.

As described above, it is considered that a small amount of boron contained in the lithium nickel complex oxide forms a lithium-boron-containing compound, **i.e.,** a reaction product having low resistance, with the lithium components attached to the surfaces of the particles of the lithium nickel complex oxide. Also, it is considered that the lithium-boron-containing compound reduces the reaction resistance of the positive electrode active material.

In the above titration curve, it is inferred that the HCl dropping amount in a range having a pH of 8.0 or higher and 11.0 or lower means HCl consumed mainly in a reaction with the lithium-boron-containing compound.

Therefore, by setting 0.5 or less as the volume ratio of the HCl dropping amount in a range having a pH of 5.0 or higher and lower than 8.0 to the HCl dropping amount in a range having a pH of 8.0 or higher and 11.0 or lower, it is considered that the content of lithium carbonate is reduced, and thus the above lithium-boron-containing compound can be sufficiently formed. Therefore, it is considered that when the positive electrode active material is applied to a lithium-ion secondary battery, the reaction resistance of the positive electrode active material can be especially reduced.

A volume ratio VR of the HCl dropping amount in a range having a pH of 5.0 or higher and lower than 8.0 to the HCl dropping amount in a range having a pH of 8.0 or higher and 11.0 or lower can be calculated according to the following formula (4).

In the following formula (4), the HCl dropping amount in a range having a pH of 8.0 or higher and 11.0 or lower is denoted by "V(8.0-11.0)", and the HCl dropping amount in a range having a pH of 5.0 or higher and lower than 8.0 is denoted by "V(5.0~8.0)".

$$VR=V(5.0\text{~}8.0)\div V(8.0\text{~}11.0) \ \ldots \ (4)$$

VR is preferably 0.5 or less as described above, more preferably 0.25 or less, and further preferably 0.2 or less.

No particular limitation is imposed on the lower limit of VR. The lower limit of VR is preferably 0.01 or more, and more preferably 0.05 or more. This is because it is difficult to remove lithium carbonate completely.

(4) Regarding Variation Index of Particle Sizes, and Volume Average Particle Size

The positive electrode active material of the present embodiment preferably has a value of [(D90-D10)/volume average particle size Mv], indicating a variation index of particle sizes, of 0.70 or more and 1.20 or less, and more preferably 0.80 or more and 1.00 or less.

In the present specification, D10 denotes a cumulative 10% particle size, and means a volume-based 10% particle size in a particle size distribution determined by the laser diffraction and scattering method, **i.e.,** a particle size at a volume cumulative value of 10%. D90 denotes a cumulative 90% particle size, and means a volume-based 90% particle size in a particle size distribution determined by the laser diffraction and scattering method, **i.e.,** a particle size at a volume cumulative value of 90%. In the other parts of the present specification, D10 and D90 have the same meanings.

The volume average particle size Mv is an average particle size weighted by the volume of the particles, and is obtained by multiplying the particle sizes of individual particles in a group of particles with the volumes of the particles, and dividing the sum of the calculated products by the total volume of the particles. The volume average particle size can also be measured and calculated by the laser diffraction and scattering method using a laser diffraction-type particle size distribution analyzer.

The variation index of the particle sizes of the positive electrode active material is set to 0.70 or more. This is because, for example, when forming a positive electrode, particles of relatively small particle sizes are arranged between particles of relatively large particle sizes, and thus the packing density of the positive electrode active material can be increased.

The variation index of the particle sizes of the positive electrode active material is set to 1.20 or less. This is because inclusion of excessively coarse particles or minute particles can be suppressed, and when the positive electrode active material is used in a lithium-ion secondary battery, output characteristics can be especially enhanced.

No particular limitation is imposed on the volume average particle size Mv of the positive electrode active material of the present embodiment. For example, the volume average particle size Mv is preferably 8 $\mu$m or more and 20 $\mu$m or less, and more preferably 10 $\mu$m or more and 18 $\mu$m or less.

By setting the volume average particle size Mv of the positive electrode active material of the present embodiment to be in the above-described range, output characteristics and battery capacity can be especially enhanced when the positive electrode active material of the present embodiment is used in a positive electrode of a lithium-ion secondary battery, and moreover, a high packing property with respect to the positive electrode can also be achieved. Specifically, by setting the volume average particle size Mv of the positive electrode active material of the present embodiment to 8 $\mu$m or more, the packing property with respect to the positive electrode can be increased. Also, by setting the volume average particle size Mv of the positive electrode active material of the present embodiment to 20 $\mu$m or less, output characteristics and battery capacity can be especially enhanced.

[Production Method of Positive Electrode Active Material for Lithium-Ion Secondary Battery]

The production method of the positive electrode active material for the lithium-ion secondary battery of the present embodiment will be described. According to the production method of the positive electrode active material for the lithium-ion secondary battery of the present embodiment, the positive electrode active material described above can be produced. Therefore, a part of the description of the already described matters will be omitted. The production method of the above-described positive electrode active material is not limited to the following production method of the positive electrode active material.

The production method of the positive electrode active material of the present embodiment can include a mixing step, a firing step, a water washing step, a boron adding step, a thermal treatment step, and a cooling step, which will be described below.

In the mixing step, a nickel-containing material containing an element other than lithium (Li), boron (B), and oxygen (O) among the elements contained in the lithium nickel complex oxide, e.g., nickel (Ni), and optional element M (M) is mixed with a lithium compound, and thus a first raw material mixture can be prepared.

In the firing step, the first raw material mixture is fired in an oxidative atmosphere, and thus a fired product can be formed.

In the water washing step, the fired product obtained in the firing step is washed with water, and thus water-washed powder can be obtained.

In the boron adding step, the water-washed powder and a boron-containing material are mixed, and thus a second raw material mixture can be prepared.

In the thermal treatment step, the second raw material mixture can be thermally treated.

Each of the steps will be described below.

(1) Mixing Step

In the mixing step, as described above, the nickel-containing material containing at least nickel, and the lithium compound are mixed, and thus the first raw material mixture can be prepared. The raw materials to be used will be described below.

(1-1) Nickel-Containing Material

The nickel-containing material to be used in the mixing step can contain, as described above, nickel and optional element M, which are elements other than lithium, boron, and oxygen, among the elements contained in the intended lithium nickel complex oxide. The nickel-containing material does not necessarily need to contain element M because element M is a component that is optionally added.

As long as the nickel-containing material contains elements corresponding to the intended composition of the lithium nickel complex oxide, no particular limitation is imposed on the composition and the like of the nickel-containing material. For example, the nickel-containing material can contain nickel complex hydroxide or a nickel complex compound, which is a roasted product of nickel complex hydroxide. The nickel-containing material can also be formed of the nickel complex compound. Examples of the roasted product of the nickel complex hydroxide include nickel complex oxide, and a mixture of nickel complex oxide and nickel complex hydroxide.

The nickel-containing material may be, for example, one or more selected from materials having an element M-containing coat layer on the surface of nickel oxide, nickel hydroxide, or the like, and mixtures of nickel oxide, nickel hydroxide, or the like and compounds of element M.

When the lithium nickel complex oxide contains a plurality of types of element M, the nickel-containing material may be a mixture of an element M-containing nickel complex compound as a part of the mixture and a compound of element M as a balance of the mixture. In this case, the nickel complex compound is preferably one or more selected from nickel complex oxide and nickel complex hydroxide.

When the nickel-containing material contains the compound of element M, no particular limitation is imposed on the form of the compound of element M, and one or more selected from hydroxide, oxide, chloride, nitrate, sulfate, carbonate, and the like can be used.

The nickel-containing material preferably contains nickel (Ni) and element M (M) at a ratio by mole of Ni:M=b:d. In this formula, b, d, and element M can be the same materials and used in the same suitable ranges as described in "(1-1) Regarding Composition" of "(1) Regarding Lithium Nickel Complex Oxide" of the positive electrode active material, and thus description thereof is omitted here.

When the nickel-containing material is nickel complex oxide, the nickel-containing material can be represented, for example, by general formula: $Ni_{b'}M_{d'}O_{1+\beta}$.

When the nickel-containing material is nickel complex hydroxide, the nickel-containing material can be represented, for example, by general formula:

$$Ni_{b'}M_{d'}(OH)_{2+\gamma}.$$

Note that b' and d' are in the following relationship with the above-described b and d, i.e., b':d'=b:d, and b'+d'=1 is satisfied. Because b, d and element M have already been described, description thereof is omitted here. $\beta$ and $\gamma$ are preferably, for example, $-0.2 \leq \beta \leq 0.2$ and $-0.2 \leq \gamma \leq 0.2$.

When the nickel-containing material contains nickel complex hydroxide, no particular limitation is imposed on a production method and the like of the nickel complex hydroxide. For example, nickel complex hydroxide obtained by the crystallization method, such as the co-precipitation method, the homogeneous precipitation method, or the like can be used.

In the mixing step, the above-described nickel complex hydroxide may be used as is as a part or the entirety of the nickel-containing material, but the nickel complex hydroxide may be oxidatively roasted and then used as a roasted product.

No particular limitation is imposed on conditions for oxidatively roasting the nickel complex hydroxide. Preferably, the above-described nickel complex hydroxide is oxidatively roasted in an oxidative atmosphere at a temperature of 500°C or higher and 800°C or lower.

When the roasted product of the nickel complex hydroxide is used as the nickel complex compound, the compositional ratio of Li in the lithium nickel complex oxide to Ni or element M can be especially stabilized when the first raw material mixture mixed with the lithium compound is fired to obtain the lithium nickel complex oxide.

No particular limitation is imposed on the atmosphere for performing oxidative roasting. The oxidative roasting is preferably performed in an oxidative atmosphere as described above. More preferably, the oxidative roasting is performed in an open air atmosphere (air atmosphere) or a flow of air, in which the oxidative roasting can be performed in a simple manner.

(1-2) Lithium Compound

No particular limitation is imposed on the lithium compound. It is preferable to use, for example, one or more selected from lithium hydroxide, lithium carbonate, lithium nitrate, lithium sulfate, lithium chloride, and lithium oxide. More preferably, one or more selected from lithium hydroxide and lithium carbonate can be used as the lithium compound. Lithium hydroxide has high reactivity with the nickel complex compound and low reaction temperature, and thus it is further preferable to use lithium hydroxide as the lithium compound.

In the production method of the positive electrode active material of the present embodiment, the nickel-containing material and the lithium compound are mixed as described above, and thus the first raw material mixture can be prepared.

Although no particular limitation is imposed on the mixing ratio between the nickel-containing material and the lithium compound, the composition of lithium and nickel and/or element M in the fired product obtained after firing is substantially maintained to be the composition of the first raw material mixture obtained by mixing the nickel-containing material and the lithium compound.

However, lithium may be slightly reduced, for example, when performing the water washing step, which will be described below. Thus, it is preferable to adjust the amount of lithium (Li) in the lithium compound relative to the total amount (Me) of, for example, nickel and element M in the nickel-containing material such that a ratio by mole (Li/Me) is 1.005 or higher and 1.100 or lower.

By setting Li/Me to 1.005 or higher, crystallinity of the obtained lithium nickel complex oxide can become high, and the content ratio of lithium in the obtained lithium nickel complex oxide to those of the elements other than oxygen can be set to the intended ratio.

Also, by setting Li/Me to 1.100 or lower, excessive progress of firing can be suppressed, e.g., progress of sintering and the like of secondary particles in the obtained lithium nickel complex oxide can be suppressed.

No particular limitation is imposed on the apparatus and method for mixing the nickel-containing material and the lithium compound as long as they can mix the nickel-containing material and the lithium compound homogeneously. For example, a dry-type mixer, such as a V blender or the like, or a mixing granulator or the like can be used.

(2) Firing Step

In the firing step, the first raw material mixture can be fired in an oxidative atmosphere, and thus a fired product can be obtained. When the first raw material mixture is fired in the firing step, a fired product is obtained in which lithium in the lithium compound is diffused into and reacts with the nickel-containing material.

In the firing step, no particular limitation is imposed on the firing temperature at which the first raw material mixture is fired. The firing temperature can be set, for example, to 600°C or higher and 1,000°C or lower.

By setting the firing temperature to 600°C or higher, it is possible to sufficiently progress the diffusion of lithium into the nickel-containing material.

By setting the firing temperature to 1,000°C or lower, it is possible to suppress progress of sintering between particles of the formed fired product. Also, it is possible to suppress growth of abnormal grains, and coarsening of particles of the obtained fired product.

In the process of increasing the temperature to the firing temperature, it is possible to maintain the first raw material mixture to be in a temperature range from the vicinity of the melting point of the employed lithium compound to the firing temperature, e.g., in a temperature range of 400°C or higher and 550°C or lower, for about one hour or longer and about five hours or shorter. By maintaining the first raw material mixture in the above temperature range, an especially uniform reaction can be performed.

The atmosphere during firing is preferably an oxidative atmosphere. No particular limitation is imposed on the oxidative atmosphere, but an oxygen-containing gas atmosphere can be used. For example, an atmosphere in which the oxygen concentration is 18% by volume or higher and 100% by volume or lower is more preferable.

The oxygen concentration in the atmosphere during firing is set to 18% by volume or higher because the reaction between the lithium compound and the nickel-containing material can be promoted, and crystallinity of the lithium nickel complex oxide can become high.

When the atmosphere during firing is an oxygen-containing gas atmosphere, gas forming the atmosphere can be, for example, air, oxygen, a gas mixture of oxygen and inert gas, or the like.

When, for example, a mixture of oxygen and inert gas is used as the gas forming the oxygen-containing gas atmosphere as described above, the oxygen concentration in the gas mixture preferably falls within the above-described range.

In particular, the firing step is preferably performed in a flow of oxygen-containing gas, and more preferably in air or in a flow of oxygen. Considering battery characteristics, the firing step is more preferably performed in a flow of oxygen.

No particular limitation is imposed on the furnace used for firing as long as the first raw material mixture can be fired in a predetermined atmosphere. From the viewpoint of maintaining the atmosphere in the furnace to be uniform, an electric furnace that does not involve generation of gas is preferable, and both a batch-type furnace and a continuous furnace can be used.

In the production method of the positive electrode active material of the present embodiment, when aggregation of particles of the fired product occurs in the firing step, a crushing step (first crushing step) of crushing the fired product can be provided.

Here, the crushing means a treatment of applying mechanical energy to aggregates of a plurality of secondary particles formed by sintering necking or the like between the secondary particles during firing, separating the secondary particles without destroying the secondary particles, and loosening the aggregates. For example, a pin mill, a hammer mill, a pulverizer, or the like may be used to crush the secondary particles without destroying the secondary particles.

The production method of the fired product prepared in the firing step is not limited to the above-described method. The fired product can also be prepared, for example, by a method of spray pyrolysis of a liquid in which aqueous solutions containing desired metal elements are all mixed, or by a method in which compounds of desired elements are all milled and mixed through mechanical milling by means of a ball mill or the like, followed by firing.

### (3) Water Washing Step

In the water washing step, the fired product obtained in the firing step is washed with water, and thus water-washed powder can be obtained. In the water washing step, the fired product obtained in the firing step and water are mixed to form a slurry, and can be washed with water as the slurry (slurry formation step). No particular limitation is imposed on the slurry concentration when the fired product is washed with water. For example, the slurry concentration can be 200 g/L or higher and 5,000 g/L or lower. When the slurry concentration is 5,000 g/L or lower, stirring of the slurry can be facilitated, and the dissolution speed of adherents can be increased.

When the slurry concentration is 200 g/L or higher, deintercalation of lithium from the crystal lattice of the fired product is prevented, and collapse of the crystal can be suppressed. When the slurry concentration is 5,000 g/L or lower, reprecipitation of lithium carbonate due to a high pH aqueous solution absorbing carbon dioxide gas in the open air atmosphere can be prevented.

Also, the washing with water can be performed by controlling the temperature of the slurry to be in a temperature range of 10°C or higher and 40°C or lower, and controlling the electrical conductivity of the liquid of the slurry to be 30 mS/cm or higher and 90 mS/cm or lower.

By setting the electrical conductivity of the slurry prepared in the water washing step to be within the above-described range, it is possible to selectively and sufficiently reduce the excess components attached to the surfaces of the particles of the fired product, such as excess lithium and the like.

No particular limitation is imposed on water used in the water washing step. For example, water having an electrical conductivity of lower than 10 µS/cm, and preferably water having an electrical conductivity of 1 µS/cm or lower can be used.

No particular limitation is imposed on the duration of washing with water. The duration of washing with water can be set, for example, to three minutes or longer and two hours or shorter from the viewpoints of sufficiently removing the excess components attached to the surfaces of the particles of the fired product, and also increasing productivity. During washing with water, the produced slurry is preferably under stirring.

In the water washing step, after the formation into the slurry, the slurry is subjected to solid-liquid separation, i.e., filtration and dehydration, and thus water-washed powder can be obtained (solid-liquid separation step). No particular limitation is imposed on filtration and dehydration, and, for example, a filter press-type solid-liquid separator can be used.

In the water washing step, preferably, the water-containing water-washed powder obtained after the solid-liquid separation is dried, and then subjected to the boron adding step. Thus, the water-washed powder can be dried (drying step). No particular limitation is imposed on drying conditions.

The drying is preferably performed, for example, in an oxidative atmosphere or a vacuum atmosphere at a temperature of 100°C or higher and 250°C or lower. By setting the drying temperature to 100°C or higher, the water contained in the water-washed powder can be sufficiently evaporated. By setting the drying temperature to 250°C or lower, energy required for the drying can be suppressed, and thus cost can be reduced.

In order to avoid a reaction between the water-washed powder and moisture and/or carbon dioxide contained in the atmosphere, the atmosphere during drying is preferably an atmosphere in which water vapor and carbon dioxide are reduced or eliminated. Specifically, the atmosphere during drying is preferably an oxidative atmosphere, such as an oxygen atmosphere or the like, or a vacuum atmosphere. Also, from the viewpoint of rapidly exhausting water vapor generated in the process of drying, it is preferable to add an exhaust mechanism to a dryer.

No particular limitation is imposed on the duration of drying, but the duration of drying is 0.5 hours or longer and 48 hours or shorter. By setting the duration of drying, i.e., the duration of retention at the highest reachable temperature during drying, to 0.5 hours or longer, the water contained in the water-washed powder can be sufficiently reduced and removed. Also, by setting the duration of drying to 48 hours or shorter, productivity is increased.

### (4) Boron Adding Step

In the boron adding step, the water-washed powder and the boron-containing material are mixed, and thus the second raw material mixture can be prepared.

No particular limitation is imposed on the boron-containing material to be added. For example, the boron-containing material may be a boron simple substance or may be a boron-containing compound containing boron. That is, the boron-containing material is preferably at least one selected from a boron simple substance and a boron-containing compound. The boron-containing compound is preferably such that the components other than boron are those that can be exhausted outside the system in the thermal treatment step, which will be described below. A compound suitably usable as the boron-containing compound is orthoboric acid ($H_3BO_3$), boron oxide ($B_2O_3$), boron nitride (BN), or the like, in which the components other than B are one or more selected from hydrogen, oxygen, and nitrogen.

No particular limitation is imposed on the mixing ratio between the water-washed powder and the boron-containing material. The mixing ratio can be selected by performing a test and the like in advance such that the lithium nickel complex oxide obtained after thermal treatment has the intended composition.

Typically, the composition of the lithium nickel complex oxide obtained after thermal treatment is substantially maintained to be the composition of the second raw material mixture. Therefore, it is preferable to prepare the second raw material mixture such that the composition of the second raw material mixture is the same as that of the intended lithium nickel complex oxide.

Here, in order to cause boron and the water-washed powder to react uniformly in the subsequent thermal treatment step, it is preferable to minutely shatter the boron-containing material to be added. Specifically, the average diameter in the long-axis direction of secondary particles of the boron-containing material observed in a surface SEM image is preferably 0.1 μm or more and 100 μm or less. The average diameter in the long-axis direction is calculated by randomly selecting 30 or more secondary particles of the boron-containing material observed in a surface SEM image, and taking the average value of particle sizes in the long-axis direction measured for the secondary particles. No particular limitation is imposed on the upper limit of the number of secondary particles to be measured for the particle size in the long-axis direction. From the viewpoint of reducing the time required for evaluation, it is preferable to set the upper limit to 100 or less.

No particular limitation is imposed on the apparatus and method for mixing the water-washed powder and the boron-containing material as long as they can mix the water-washed powder and the boron-containing material homogeneously. For example, a dry-type mixer, such as a V blender or the like, or a mixing granulator or the like can be used.

In order to avoid a reaction of the water-washed powder and the like with moisture and/or carbon dioxide contained in the atmosphere, a container to be used for mixing is preferably purged with inert gas. Also, in order to suppress inhomogeneity due to aggregation of the boron-containing material, it is preferable to sieve the second raw material mixture several times after mixing of the boron-containing material, thereby loosening the aggregated state of the boron-containing material.

(5) Thermal Treatment Step

In the thermal treatment step, the second raw material mixture can be thermally treated.

By performing the thermal treatment step, it is considered that the formation of the lithium-boron-containing compound can be promoted by a reaction between boron and the lithium components attached to the surfaces of particles of the water-washed powder.

In the thermal treatment step, no particular limitation is imposed on the thermal treatment temperature at which the second raw material mixture is to be thermally treated. The thermal treatment temperature can be selected, for example, in accordance with the added boron-containing material. The thermal treatment in the thermal treatment step is preferably performed, for example, at 200°C or higher and 500°C or lower, and more preferably at 200°C or higher and 400°C or lower.

By setting the thermal treatment temperature to 200°C or higher, the reaction between the boron and the lithium components can proceed sufficiently.

By setting the thermal treatment temperature to 500°C or lower, it is possible to prevent diffusing of the boron into the atmosphere before the boron reacts with the lithium components.

No particular limitation is imposed on the atmosphere during thermal treatment in the thermal treatment step, and, for example, the thermal treatment step can be performed in an oxidative atmosphere or an inert gas atmosphere.

No particular limitation is imposed on the oxidative atmosphere, but an oxygen-containing gas atmosphere can be used. For example, an atmosphere in which the oxygen concentration is 18% by volume or higher and 100% by volume or lower is more preferable.

When the atmosphere during thermal treatment in the thermal treatment step is an oxygen-containing gas atmosphere, gas forming the atmosphere can be, for example, air, oxygen, a gas mixture of oxygen and inert gas, or the like.

The thermal treatment step is preferably performed in an atmosphere in which the concentration of carbon dioxide gas is reduced, such as a decarbonated gas atmosphere or the like. Therefore, even if, for example, the oxidative atmosphere or the inert gas atmosphere is used, the concentration of carbon dioxide gas is preferably reduced.

No particular limitation is imposed on the concentration of carbon dioxide gas in the thermal treatment atmosphere as long as the concentration of carbon dioxide gas is reduced to be lower than that in the normal atmosphere. Therefore, the concentration of carbon dioxide in the thermal treatment atmosphere is preferably lower than 0.03% by volume, more preferably 0.02% by volume or lower, further preferably 0.01% by volume or lower, and particularly preferably 0.008% by volume or lower.

By performing thermal treatment in an atmosphere in which the concentration of carbon dioxide gas is reduced, the formation of the carbon-containing compounds, such as lithium carbonate and the like, can be suppressed. Therefore, the above-described C content ratio can be reduced, and the ratio of the B content ratio to the C content ratio can be increased. The atmosphere in which the concentration of carbon dioxide gas is reduced is preferably used during cooling after the thermal treatment.

No particular limitation is imposed on the furnace used for the thermal treatment as long as the second raw material mixture can be thermally treated in a predetermined atmosphere. From the viewpoint of maintaining the atmosphere in the furnace to be uniform, an electric furnace that does not involve generation of gas is preferable, and both a batch-type furnace and a continuous furnace can be used.

The production method of the positive electrode active material of the present embodiment may also include a crushing step (second crushing step) of crushing the lithium nickel complex oxide when particles of the lithium nickel complex oxide are aggregated after the thermal treatment step. The crushing can be performed in the same manner as in the above-described first crushing step, and thus description thereof will be omitted.

[Lithium-Ion Secondary Battery]

The lithium-ion secondary battery (hereinafter also referred to as "secondary battery") of the present embodiment includes at least a positive electrode, a negative electrode, and a non-aqueous electrolyte. The positive electrode can contain the above-described positive electrode active material for the lithium-ion secondary battery.

Hereinafter, components of one configuration example of the secondary battery of the present embodiment will be described. The secondary battery of the present embodiment includes, for example, the positive electrode, the negative electrode, and the non-aqueous electrolyte, and is formed of components similar to those of a typical lithium-ion secondary battery. The embodiments described below are merely illustrative, and the lithium-ion secondary battery of the present embodiment can be embodied in various modified and improved forms based on knowledge of persons skilled in the art, including the following embodiments. Also, no particular limitation is imposed on applications of the secondary battery.

(Positive Electrode)

The positive electrode of the secondary battery of the present embodiment may include the above-described positive electrode active material.

One example of a production method of the positive electrode will be described below. First, the above-described positive electrode active material (powder form), a conductive material, and a binding agent (binder) are mixed to form a positive electrode mixture. If necessary, activated carbon or a solvent for viscosity adjustment or the like is added. The resulting mixture is kneaded to form a positive electrode mixture paste.

The mixing ratio of the materials in the positive electrode mixture is a factor that determines the performance of the lithium-ion secondary battery, and can be adjusted in accordance with intended applications. The mixing ratio of the materials may be similar to that of a positive electrode of a publicly known lithium-ion secondary battery. For example, when the total mass of the solid content of the positive electrode mixture excluding the solvent is 100% by mass, the positive electrode active material may be contained in an amount of 60% by mass or more and 95% by mass or less, the conductive material may be contained in an amount of 1% by mass or more and 20% by mass or less, and the binding agent may be contained in an amount of 1% by mass or more and 20% by mass or less.

The obtained positive electrode mixture paste is applied to the surface of a current collector formed of, for example, aluminum foil, and is dried to diffuse the solvent, thereby producing a sheet-like positive electrode. If necessary, the positive electrode can be pressed by a roll press or the like in order to increase the electrode density. The sheet-like positive electrode obtained in this manner can be, for example, cut to an appropriate size in accordance with an intended battery, and can be used for the production of a battery.

As the conductive material, for example, graphite (natural graphite, artificial graphite, expanded graphite, or the like), a carbon black material, such as acetylene black, Ketjen black (registered trademark), or the like can be used.

The binding agent (binder) plays a role in binding active material particles together. For example, it is possible to use one or more selected from polyvinylidene fluoride (PVDF), polytetrafluoroethylene (PTFE), fluororubber, ethylene propylene diene rubber, styrene butadiene, a cellulose-based resin, polyacrylic acid, and the like.

If necessary, a solvent that disperses the positive electrode active material, the conductive material, and the like and dissolves the binding agent may be added to the positive electrode mixture. As the solvent, specifically, an organic solvent, such as N-methyl-2-pyrrolidone or the like, can be used. Also, activated carbon may be added to the positive electrode mixture in order to increase electric double layer capacitance.

The production method of the positive electrode is not limited to the above method described as an example, and may be any other method. For example, the positive electrode may be produced by press-molding the positive electrode mixture and then drying the resulting product in a vacuum atmosphere.

(Negative Electrode)

The negative electrode for use may be a metal lithium, a lithium alloy, or the like. The negative electrode may be formed in the following manner. Specifically, a binding agent is mixed with a negative electrode active material enabling intercalation and deintercalation of lithium ions, followed by addition of an appropriate solvent, thereby forming a negative electrode mixture paste. The negative electrode mixture paste is applied to the surface of a metal foil current collector, such as copper or the like, followed by drying. If necessary, the resulting product is compressed in order to increase the electrode density.

As the negative electrode active material, for example, it is possible to use fired organic compounds, such as natural graphite, artificial graphite, a phenol resin, and the like, and powdered carbon materials, such as coke and the like. In this case, a fluorine-containing resin, such as PVDF or the like, can be used as the negative electrode binding agent, as in the positive electrode. As a solvent that disperses the active material and the binding agent, an organic solvent, such as N-methyl-2-pyrrolidone or the like, can be used.

(Separator)

A separator may be interposed between the positive electrode and the negative electrode, if necessary. The separator is configured to separate the positive electrode and the negative electrode from each other, and retain the electrolyte. A publicly known separator can be used as the above separator. For example, it is possible to use a thin film formed of polyethylene, polypropylene, or the like and having many minute pores.

(Non-Aqueous Electrolyte)

As the non-aqueous electrolyte, for example, a non-aqueous electrolytic solution can be used.

As the non-aqueous electrolytic solution, for example, it is possible to use a solution prepared by dissolving a lithium salt, serving as a supporting salt, in an organic solvent. Also, the non-aqueous electrolytic solution for use may be a solution prepared by dissolving a lithium salt in an ionic liquid. The ionic liquid refers to a salt that is formed of a cation other than a lithium ion and an anion and is in a liquid state even at normal temperature.

Examples of the organic solvent include, for example: cyclic carbonates, such as ethylene carbonate, propylene carbonate, butylene carbonate, fluoroethylene carbonate, trifluoropropylene carbonate, and the like; chain carbonates, such as diethyl carbonate, dimethyl carbonate, ethyl methyl carbonate, dipropyl carbonate, and the like; ether compounds, such as tetrahydrofuran, 2-methyltetrahydrofuran, dimethoxyethane, and the like; sulfur compounds, such as ethyl methyl sulfone, butane sultone, and the like; and phosphorus compounds, such as triethyl phosphate, trioctyl phosphate, and the like. These may be used alone or in combination as a mixture.

As the supporting salt, it is possible to use $LiPF_6$, $LiBF_4$, $LiClO_4$, $LiAsF_6$, $LiN(CF_3SO_2)_2$, composite salts thereof, and the like. Further, the non-aqueous electrolytic solution may contain a radical scavenger, a surfactant, a flame retardant, and the like.

Also, as the non-aqueous electrolyte, a solid electrolyte may be used. The solid electrolyte has a property to withstand a high voltage. Examples of the solid electrolyte include inorganic solid electrolytes and organic solid electrolytes.

Examples of the inorganic solid electrolyte include oxide-based solid electrolytes, sulfide-based solid electrolytes, and the like.

No particular limitation is imposed on the oxide-based solid electrolytes. For example, it is preferable to use the oxide-based solid electrolytes that contain oxygen (O) and having lithium-ion conductivity and electron insulation properties. For example, as the oxide-based solid electrolytes, it is possible to use one or more selected from lithium phosphate ($Li_3PO_4$), $Li_3PO_4N_x$, $LiBO_2N_x$, $LiNbO_3$, $LiTaO_3$, $Li_2SiO_3$, $Li_4SiO_4$-$Li_3PO_4$, $Li_4SiO_4$-$Li_3VO_4$, $Li_2O$-$B_2O_3$-$P_2O_5$, $Li_2O$-$SiO_2$, $Li_2O$-$B_2O_3$-$ZnO$, $Li_{1+X}AlxTi_{2-X}(PO_4)_3$ ($0{\leq}X{\leq}1$), $Li_{1+X}Al_XGe_{2-X}(PO_4)_3$ ($0{\leq}X{\leq}1$), $LiTi_2(PO_4)_3$, $Li_{3X}La_{2/3-X}TiO_3$ ($0{\leq}X{\leq}2/3$), $Li_5La_3Ta_2o_{12}$, $Li_7La_3Zr_2O_{12}$, $Li_6BaLa_2Ta_2O_{12}$, $Li_{3.6}Si_{0.6}P_{0.4}O_4$, and the like.

No particular limitation is imposed on the sulfide-based solid electrolytes. For example, it is preferable to use the sulfide-based solid electrolytes that contain sulfur (S) and having lithium-ion conductivity and electron insulation properties. As the sulfide-based solid electrolytes, it is possible to use one or more selected from $Li_2S$-$P_2S_5$, $Li_2S$-$SiS_2$, $LiI$-$Li_2S$-$SiS_2$, $LiI$-$Li_2S$-$P_2S_5$, $LiI$-$Li_2S$-$B_2S_3$, $Li_3PO_4$-$Li_2S$-$Si_2S$, $Li_3PO_4$-$Li_2S$-$SiS_2$, $LiPO_4$-$Li_2S$-$SiS$, $LiI$-$Li_2S$-$P_2O_5$, $LiI$-$Li_3PO_4$-$P_2S_5$, and the like.

The inorganic solid electrolyte for use may be an inorganic solid electrolyte other than the above-listed ones. Examples thereof include $Li_3N$, $LiI$, $Li_3N$-$LiI$-$LiOH$, and the like.

No particular limitation is imposed on the organic solid electrolytes as long as the organic solid electrolytes are a polymer compound exhibiting ionic conductivity. For example, it is possible to use polyethylene oxide, polypropylene oxide, copolymers thereof, and the like. Also, the organic solid electrolyte may contain a supporting salt (lithium salt).

(Shape and Configuration of Secondary Battery)

The lithium-ion secondary battery of the present embodiment described above can have various shapes, such as a cylindrical shape, a stacked shape, or the like. Regardless of the shape thereof, as long as the secondary battery of the present embodiment uses the non-aqueous electrolytic solution as the non-aqueous electrolyte, a structure that is hermetically closed in a battery casing can be obtained when the positive electrode and the negative electrode are stacked via a separator to form an electrode body, the resulting electrode body is impregnated with the non-aqueous electrolytic solution, and the positive electrode current collector and the positive electrode terminal leading to the exterior are connected to each other using a current collecting lead or the like, and the negative electrode current collector and the negative electrode terminal leading to the exterior are connected to each other using a current collecting lead or the like.

As described above, the secondary battery of the present embodiment is not limited to the form in which the non-aqueous electrolytic solution is used as the non-aqueous electrolyte. The secondary battery may be, for example, a secondary battery using a solid non-aqueous electrolyte, **i.e.,** an all-solid-state battery. In the case of an all-solid-state battery, the configuration other than the positive electrode active material may be changed, if necessary.

The secondary battery of the present embodiment can be used for various applications. The secondary battery of the present embodiment can be a high-capacity, high-output secondary battery. Thus, the secondary battery of the present embodiment is suitable, for example, as a power supply of a small portable electronic device (e.g., a laptop personal computer, a mobile phone terminal, or the like) for which a high capacity is always required. Also, the secondary battery of the present embodiment is suitable as a power supply of an electric vehicle for which a high output is required.

The secondary battery of the present embodiment can be made compact and high-output. Thus, the secondary battery of the present embodiment is suitable as a power supply for an electric vehicle that has limitation in terms of a space available for the power supply. The secondary battery of the present embodiment can be used not only as a power supply for an electric vehicle driven purely by electric energy, but also as a power supply for what is referred to as a hybrid vehicle that also uses a combustion engine, such as a gasoline engine, a diesel engine, or the like.

EXAMPLES

The present invention will be described below in more detail by way of examples. However, the present invention is not limited in any way by these examples.

First, evaluation methods of the positive electrode active materials and the secondary batteries obtained in the following examples and comparative examples will be described.

(Evaluation of Positive Electrode Active Material)

The obtained positive electrode active material was evaluated in the following manner.

(a) Evaluation of Composition, Crystal Structure, and Particle Structure

Analysis of a composition was performed using an ICP optical emission spectrometer (ICPE-9000, obtained from Shimadzu Corporation).

Powder X-ray diffraction patterns of the obtained positive electrode active materials were measured, and crystal structures and the like were identified through Rietveld analysis. As a result, it was confirmed that the positive electrode active materials prepared in the following examples and comparative examples were formed of lithium nickel complex oxides, and the lithium nickel complex oxides had a hexagonal crystalline layered structure.

Further, particles of the positive electrode active materials were observed using a scanning electron microscope. As a result, it was confirmed that the positive electrode active materials prepared in the following examples and comparative examples contained secondary particles in which a plurality of primary particles were aggregated.

(b) B Content Ratio and C Content Ratio

Using an XPS apparatus (Versa Probe II, obtained from ULVAC-PHI, INCORPORATED) with Al-K$\alpha$ radiation monochromatized by a monochromator being used as an X-ray source, a photoelectron spectrum of the positive electrode active material was measured in a vacuum atmosphere of $1.0 \times 10^{-6}$ Pa or lower.

Then, the ratios of the amounts by moles of lithium, nickel, boron, element M, and carbon were calculated from the peak areas of the obtained photoelectron spectra, and the B content ratio, the C content ratio, and the ratio of the B content ratio to the C content ratio were calculated according to the above-described formulae (1) to (3). When calculating the ratios of the amounts by moles of the respective elements, after performing peak separation of the measured XPS photoelectron spectra, the peak having the highest intensity for each element was used.

(c) Titration Curve

10 g of the positive electrode active material obtained in the following examples and comparative examples was stirred in 50 mL of pure water for 5 minutes, and a filtrate after filtration of the resulting mixture was subjected to neutralization titration using 1.0M HCl, thereby measuring a titration curve. Distilled water was used as the pure water.
From the obtained titration curve, the HCl dropping amounts in the respective pH ranges shown in the column "Neutralization titration HCl dropping amount" in Table 1 were determined. Also, VR, i.e., a ratio of the HCl dropping amounts, were calculated according to the above-described formula (4).

(d) Variation Index of Particle Sizes

A volume-based particle size distribution was measured by a laser diffraction and scattering particle size distribution analyzer (MICROTRAC MT3300EXII, obtained from MicrotracBEL Corp.). From the particle size distribution, D10, D90, and the volume average particle size Mv were calculated.
Then, [(D90-D10)/volume average particle size Mv], i.e., the variation index of particle sizes, was calculated.

(Evaluation of Battery Characteristics)

(a) Reaction Resistance

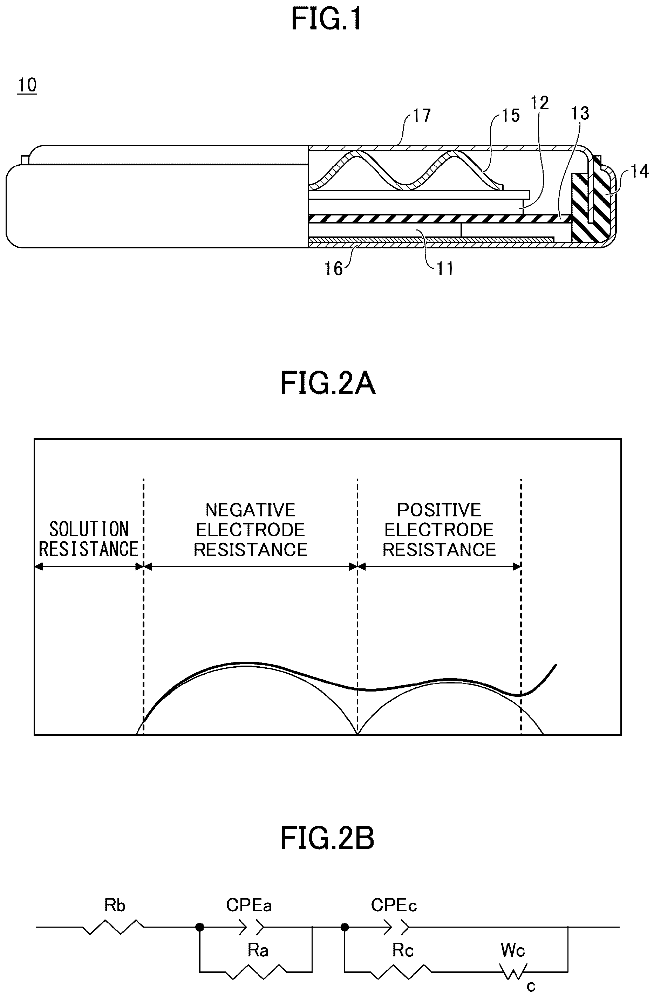

A coin-type battery produced in the following examples and comparative examples was charged at a charge potential of 4.1 V, and the electrical resistance was measured by the alternating current impedance method using a frequency response analyzer and a potentiogalvanostat (1255B, obtained from Solartron Co.). When the relationship between the measured mechanism and frequency is graphed, a Nyquist plot shown in FIG. 2A is obtained.
The above Nyquist plot is represented as the sum of characteristic curves showing the solution resistance, the negative electrode resistance and its capacity, and the positive electrode resistance and its capacity. Thus, as shown in FIG. 2B, fitting calculation was performed using an equivalent circuit based on this Nyquist plot, thereby calculating a value of the positive electrode resistance. The calculated positive electrode resistance was defined as the reaction resistance.

[Example 1]

(1) Production of Positive Electrode Active Material

(1-1) Mixing Step

(Nickel-Containing Material)

First, nickel complex oxide was provided by oxidatively roasting nickel complex hydroxide, which had been prepared by the neutralization crystallization method, at 600°C for 3 hours in an open air atmosphere. The nickel complex oxide was $Ni_{0.85}Mn_{0.10}Co_{0.05}O$ having a ratio by mole of Ni:Mn:Co of 85:10:5.
A mixture of the nickel complex oxide and $TiO_2$ was used as the nickel-containing material. The nickel complex oxide and $TiO_2$ were mixed such that a ratio by mole of Ni, Mn, Co, and Ti would be Ni:Mn:Co:Ti=0.829:0.098:0.049:0.024.

(Lithium Compound)

Lithium hydroxide was used as the lithium compound. Lithium hydroxide anhydrous was used as the lithium hydroxide.
The first raw material mixture was obtained by weighing and mixing the nickel-containing material and the lithium hydroxide such that Li/(Ni+Mn+Co+Ti) would be 1.02.

(1-2) Firing Step

The obtained first raw material mixture was heated to 840°C in an oxygen atmosphere using an electric furnace, and maintained at 840°C for 2 hours for firing. Subsequently, the resulting product was cooled to room temperature in the furnace. The obtained fired product was crushed.

(1-3) Water Washing Step

Next, pure water of 20°C was added to the obtained fired product, thereby forming a slurry containing 1,250 g of the fired product per 1 L of water (slurry formation step). After stirring the slurry for 20 minutes, the slurry was caused to pass through a filter press, followed by dehydration, thereby preparing a washed cake containing water-washed powder (solid-liquid separation step). Water having an electrical conductivity of 1 $\mu$S/cm or lower was used as the pure water.
The obtained washed cake was dried in a vacuum atmosphere at 190°C for 10 hours, thereby obtaining the water-washed powder (drying step).

(1-4) Boron Adding Step

The water-washed powder and orthoboric acid ($H_3BO_3$), serving as the boron-containing material, were mixed, thereby preparing the second raw material mixture. The average diameter, in the long-axis direction, of randomly selected 40 secondary particles of orthoboric acid observed in a surface SEM image was calculated to be 3 $\mu$m.
The water-washed powder and orthoboric acid were charged into a mixing container such that a ratio by mole of the following elements contained in the lithium nickel complex oxide obtained after the thermal treatment step would be the ratio as shown in Table 1, i.e.,
Li:Ni:Mn:Co:Ti:B=1.00:0.825:0.097:0.049:0.024:0.005. The water-washed powder and orthoboric acid were mixed after the container was purged with $N_2$ gas. After mixing, sieving was repeated three times to loosen the aggregated state of orthoboric acid.

(1-5) Thermal Treatment Step

In the thermal treatment step, the second raw material mixture was thermally treated at 306°C for 10 hours in an open air atmosphere that had been decarbonated. As the decarbonated open air atmosphere, air in which the concentration of carbon dioxide had been adjusted to 0.01% by volume or lower by a decarbonation treatment, was used. After thermal treatment at the above thermal treatment temperature, the product was cooled to room temperature in an open air atmosphere that had been decarbonated in the same manner.
The above-described evaluations were performed on the obtained lithium nickel complex oxide serving as the positive electrode active material. The evaluation results are shown in Table 1.

(2) Production of Secondary Battery

A coin-type battery having the structure illustrated in FIG. 1 was produced in accordance with the following procedure. The above-described evaluation was performed on the produced battery. The evaluation results are shown in Table 1.
As illustrated in FIG. 1, a coin-type battery 10 is a lithium-ion secondary battery including a positive electrode 11, a negative electrode 12, a separator 13, a gasket 14, a wave washer 15, a positive electrode can 16, and a negative electrode can 17. The positive electrode 11, the negative electrode 12, and the separator 13 were impregnated with an electrolytic solution.
In the coin-type battery 10, the positive electrode 11, the separator 13, the negative electrode 12, and the wave washer 15 are disposed in this order so as to be stacked from the positive electrode can 16 toward the negative electrode can 17. The positive electrode 11 contacts the inner surface of the positive electrode can 16, and the negative electrode 12 contacts the inner surface of the negative electrode can 17 via the wave washer 15.
The positive electrode can 16 and the negative electrode can 17 each have a hollow structure that is opened at one end, and the negative electrode can 17 is disposed in the opening of the positive electrode can 16. In the coin-type battery 10, the positive electrode 11, the negative electrode 12, the separator 13, the gasket 14, and the wave washer 15 are housed between the positive electrode can 16 and the negative electrode can 17 by disposing the negative electrode can 17 in the opening of the positive electrode can 16.
Also, the gasket 14 is disposed between the positive electrode can 16 and the negative electrode can 17, and maintains a non-contact state between the positive electrode can 16 and the negative electrode can 17, **i.e.,** restricts, and fixes, the relative movement of the positive electrode can 16 and the negative electrode can 17 so as to maintain an electrically insulated state. Also, the gasket 14 has the function of sealing the gap between the positive electrode can 16 and the negative electrode can 17, thereby air-tightly and liquid-tightly closing the interior of the coin-type battery 10 from the exterior.
The coin-type battery 10 was produced in the following manner.
First, 52.5 mg of the prepared positive electrode active material, 15 mg of acetylene black, and 7.5 mg of polytetrafluoroethylene (PTFE) were mixed, and the resulting mixture was press-molded to a diameter of 11 mm and a

thickness of 100 $\mu$m at a pressure of 100 MPa, thereby producing the positive electrode 11 shown in FIG. 1. Subsequently, the prepared positive electrode 11 was dried in a vacuum dryer at 120°C for 12 hours.

After impregnating the positive electrode 11, the negative electrode 12, and the separator 13 with an electrolytic solution, the coin-type battery 10 was produced in an Ar-atmosphere glove box controlled to a dew point of -80°C. The prepared positive electrode 11, the separator 13, the negative electrode 12, and the wave washer 15 were stacked in this order over the positive electrode can 16. Next, the negative electrode can 17 was covered over the opening of the positive electrode can 16 such that the negative electrode 12 would contact the inner surface of the negative electrode can 17 via the wave washer 15, thereby assembling the coin-type battery 10.

As the negative electrode 12, a negative electrode sheet of a copper foil punched out into a disk shape having a diameter of 14 mm and coated with graphite powder having an average particle size of about 20 $\mu$m and polyvinylidene fluoride, was used.

As the separator 13, a polyethylene porous film having a film thickness of 25 $\mu$m was used.

As the electrolytic solution, an equal amount mixture (obtained from TOMIYAMA PURE CHEMICAL INDUS-TRIES, LTD.) containing 1M $LiPF_6$ as a supporting electrolyte and containing ethylene carbonate (EC) and diethyl carbonate (DEC) at a mixing ratio by volume of 1:1, was used.

The above-described evaluations were performed on the obtained coin-type battery 10, i.e., the lithium ion secondary battery. The evaluation results are shown in Table 1.

[Examples 2 to 4]

In the boron adding step, the water-washed powder and orthoboric acid were mixed such that the ratios by mole of Li, Ni, Mn, Co, Ti, and B contained in the lithium nickel complex oxide obtained after the thermal treatment step would be the values shown in Table 1. Under the same conditions as in Example 1 except for the above point, positive electrode active materials and lithium-ion secondary batteries were produced and evaluated. The evaluation results are shown in Table 1.

[Examples 5 and 6]

Positive electrode active materials and lithium-ion secondary batteries were produced, and evaluated, under the same conditions as in Example 2 except that in the thermal treatment step, the thermal treatment temperature was changed to the temperatures shown in Table 1. The evaluation results are shown in Table 1.

[Examples 7 and 8]

$TiO_2$ was not added in the mixing step, and the temperature which the product was increased to and maintained at in the firing step was 820°C. Also, in Example 8, the thermal treatment temperature in the thermal treatment step was changed to the temperature shown in Table 1. Under the same conditions as in Example 2 except for the above points, positive electrode active materials and lithium-ion secondary batteries were produced and evaluated. The evaluation results are shown in Table 1.

[Comparative Example 1]

A positive electrode active material and a lithium-ion secondary battery were produced, and evaluated, under the same conditions as in Example 2 except that the thermal treatment step was performed in an air atmosphere that had not been decarbonated. The concentration of carbon dioxide in the air atmosphere, which had not been decarbonated, was higher than 0.03% by volume. The evaluation results are shown in Table 1.

[Comparative Example 2]

The water-washed powder obtained through drying in the water washing step was used as a positive electrode active material. That is, the steps subsequent to the boron adding step were not performed when producing the positive electrode active material. Under the same conditions as in Example 1 except for the above point, a positive electrode active material and a lithium-ion secondary battery were produced and evaluated. The evaluation results are shown in Table 1. Because boron was not added in Comparative Example 2, the ratio of the B content ratio to the C content ratio was 0.

[Table 1-1]

| | Conditions of thermal treatment step | | Ratio by mole (molar ratio) | | | | Positive electrode active material | | | | | | | | Evaluation of battery |
| | | | | | | | XPS | | | Neutralization titration HCl dropping amount | | Ratios of HCl dropping amounts | | | |
| | Temp. | Atmo-sphere | Li | Ni | B | M | B content ratio | C content ratio | B content ratio/ C content ratio | (1) 8.0≤pH≤11.0 | (2) 5.0≤pH<8.0 | VR ((2)/(1)) | Mv | (D90-D10) /Mv | Reaction resistance |
| | ℃ | – | a | b | c | d | % | % | – | mL | mL | – | $\mu$m | – | Ω |
| Ex. 1 | 306 | De-carbon-ated Air | 1.00 | 0.825 | 0.005 | Mn 0.097 Co 0.049 Ti 0.024 | 54.3 | 16.2 | 3.4 | 0.95 | 0.10 | 0.11 | 13.6 | 0.92 | 2.9 |
| Ex. 2 | 306 | De-carbon-ated Air | 1.00 | 0.822 | 0.009 | Mn 0.097 Co 0.048 Ti 0.024 | 69.0 | 15.6 | 4.4 | 1.00 | 0.10 | 0.10 | 13.8 | 0.91 | 2.8 |
| Ex. 3 | 306 | De-carbon-ated Air | 1.00 | 0.819 | 0.012 | Mn 0.097 Co 0.048 Ti 0.024 | 71.2 | 14.3 | 5.0 | 1.04 | 0.11 | 0.11 | 13.5 | 0.92 | 2.8 |
| Ex. 4 | 306 | De-carbon-ated Air | 1.00 | 0.817 | 0.015 | Mn 0.096 Co 0.048 Ti 0.024 | 73.2 | 13.1 | 5.6 | 1.08 | 0.11 | 0.10 | 13.4 | 0.93 | 2.7 |
| Ex. 5 | 326 | De-carbon-ated Air | 1.00 | 0.822 | 0.009 | Mn 0.097 Co 0.048 Ti 0.024 | 66.1 | 15.8 | 4.2 | 1.03 | 0.10 | 0.10 | 13.6 | 0.91 | 2.8 |

[Table 1-2]

| | | | | | | | | | | | | | | | | |
|---|---|---|---|---|---|---|---|---|---|---|---|---|---|---|---|---|
| Ex. 6 | 356 | De-carbon-ated Air | 1.00 | 0.822 | 0.009 | Mn 0.097 / Co 0.048 / Ti 0.024 | 63.2 | 16.0 | 4.0 | 1.06 | 0.10 | 0.09 | 13.5 | 0.92 | 2.8 |
| Ex. 7 | 306 | De-carbon-ated Air | 1.00 | 0.843 | 0.009 | Mn 0.099 / Co 0.049 | 67.2 | 15.4 | 4.4 | 1.02 | 0.10 | 0.10 | 13.4 | 0.95 | 2.9 |
| Ex. 8 | 356 | De-carbon-ated Air | 1.00 | 0.843 | 0.009 | Mn 0.099 / Co 0.049 | 63.5 | 16.3 | 3.9 | 1.07 | 0.10 | 0.09 | 13.7 | 0.93 | 3.0 |
| Comp. Ex. 1 | 306 | Air | 1.00 | 0.822 | 0.009 | Mn 0.097 / Co 0.048 / Ti 0.024 | 20.5 | 34.8 | 0.6 | 0.61 | 0.21 | 0.34 | 14.1 | 0.89 | 3.7 |
| Comp. Ex. 2 | - | - | 1.00 | 0.829 | - | Mn 0.098 / Co 0.049 / Ti 0.024 | - | - | - | 0.15 | 0.11 | 0.73 | 13.5 | 0.93 | 3.3 |

According to the results shown in Table 1, it was confirmed that the reaction resistance was reduced in the positive electrode active materials of Examples 1 to 8, in which the ratio of the B content ratio to the C content ratio was 0.8 or more and 30.0 or less.

The present application claims priority to Japanese Patent Application No. 2022-175165, filed with the Japan Patent Office on October 31, 2022, and the entire contents of Japanese Patent Application No. 2022-175165 are incorporated in the present international application by reference.

REFERENCE SIGNS LIST

10 Coin-type battery (lithium-ion secondary battery)
11 Positive electrode
12 Negative electrode
13 Separator
14 Gasket
15 Wave washer
16 Positive electrode can
17 Negative electrode can

**Claims**

1. A positive electrode active material for a lithium-ion secondary battery, the positive electrode active material comprising:

   a lithium nickel complex oxide having a hexagonal crystalline layered structure and containing secondary particles in which a plurality of primary particles are aggregated, wherein
   the lithium nickel complex oxide contains lithium (Li), nickel (Ni), boron (B), and element M (M) at a ratio by mole of Li:Ni:B:M=a:b:c:d (where $0.95 \leq a \leq 1.10$, $0.50 \leq b < 1.00$, $0.00 < c \leq 0.03$, $0.00 \leq d \leq 0.47$, $b+c+d=1$, and element M is at least one element selected from the group consisting of Mn, Co, V, Mg, Mo, Ca, Cr, Zr, Ta, Ti, Nb, Na, W, Fe, Zn, Si, Sn, Cu, P, and Al), and
   a ratio of a B content ratio to a C content ratio is 0.8 or more and 30.0 or less, where the C content ratio is a ratio of an amount by mole of carbon with respect to a total amount by mole that is a sum of amounts by moles of lithium, nickel, boron, element M, and carbon in a surface as calculated from an XPS measurement result of the positive electrode active material for the lithium-ion secondary battery, and the B content ratio is a ratio of an amount by mole of boron with respect to the total amount by mole.

2. The positive electrode active material for the lithium-ion secondary battery according to claim 1, wherein
   in a titration curve obtained from neutralization titration performed using 1.0M HCl on a filtrate after filtration of a mixture that is prepared by stirring 10 g of the positive electrode active material for the lithium-ion secondary battery in 50 mL of pure water for 5 minutes, a volume ratio of an HCl dropping amount in a range having a pH of 5.0 or higher and lower than 8.0 to an HCl dropping amount in a range having a pH of 8.0 or higher and 11.0 or lower is 0.5 or less.

3. The positive electrode active material for the lithium-ion secondary battery according to claim 1 or 2, wherein
   the C content ratio is 30% or less.

4. The positive electrode active material for the lithium-ion secondary battery according to claim 1 or 2, wherein

   a calculated value of [(D90-D10)/Mv] indicating a variation index of particle sizes is 0.70 or more and 1.20 or less, where D90 denotes a volume-based 90% particle size in a particle size distribution determined by a laser diffraction and scattering method, D10 denotes a volume-based 10% particle size in the particle size distribution, and Mv denotes a volume average particle size, and
   the volume average particle size denoted by Mv is 8 $\mu$m or more and 20 $\mu$m or less.

5. A lithium-ion secondary battery, comprising:

   a positive electrode;
   a negative electrode; and
   a non-aqueous electrolyte, wherein
   the positive electrode contains the positive electrode active material for the lithium-ion secondary battery of claim

1 or 2.

# FIG.1

# FIG.2A

| SOLUTION RESISTANCE | NEGATIVE ELECTRODE RESISTANCE | POSITIVE ELECTRODE RESISTANCE |
| --- | --- | --- |

# FIG.2B

## INTERNATIONAL SEARCH REPORT

| International application No. |
| --- |
| **PCT/JP2023/039138** |

| | |
| --- | --- |
| **A. CLASSIFICATION OF SUBJECT MATTER** | |
| ***H01M 4/525***(2010.01)i; ***H01M 4/505***(2010.01)i; ***H01M 10/0525***(2010.01)i<br>FI:  H01M4/525; H01M4/505; H01M10/0525 | |
| According to International Patent Classification (IPC) or to both national classification and IPC | |

| |
| --- |
| **B. FIELDS SEARCHED** |
| Minimum documentation searched (classification system followed by classification symbols)<br>    H01M4/525; H01M4/505; H01M10/0525 |
| Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| Electronic data base consulted during the international search (name of data base and, where practicable, search terms used) |

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2018-14199 A (SUMITOMO METAL MINING CO) 25 January 2018 (2018-01-25)<br>    paragraphs [0089]-[0103] | 1-5 |
| Y | JP 2017-188219 A (SUMITOMO METAL MINING CO) 12 October 2017 (2017-10-12)<br>    paragraph [0028] | 1-5 |
| Y | JP 4894969 B1 (SUMITOMO METAL MINING CO) 14 March 2012 (2012-03-14)<br>    paragraph [0128] | 1-5 |
| Y | JP 2012-252964 A (SUMITOMO METAL MINING CO) 20 December 2012 (2012-12-20)<br>    paragraph [0032] | 1-5 |
| Y | JP 2017-50056 A (SUMITOMO METAL MINING CO) 09 March 2017 (2017-03-09)<br>    paragraphs [0057]-[0060], [0075] | 2-5 |
| Y | JP 2020-173968 A (SUMITOMO METAL MINING CO) 22 October 2020 (2020-10-22)<br>    paragraphs [0045]-[0046], [0069]-[0071] | 2-5 |
| Y | JP 2021-5474 A (SUMITOMO METAL MINING CO) 14 January 2021 (2021-01-14)<br>    paragraphs [0075]-[0077] | 4-5 |

| ✓ Further documents are listed in the continuation of Box C. | ✓ See patent family annex. |
| --- | --- |

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **06 December 2023** | **19 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/039138**

### C. DOCUMENTS CONSIDERED TO BE RELEVANT

| Category* | Citation of document, with indication, where appropriate, of the relevant passages | Relevant to claim No. |
|---|---|---|
| Y | JP 2020-4506 A (SUMITOMO METAL MINING CO) 09 January 2020 (2020-01-09) paragraphs [0032]-[0036] | 4-5 |

Form PCT/ISA/210 (second sheet) (January 2015)

## INTERNATIONAL SEARCH REPORT
### Information on patent family members

International application No.

**PCT/JP2023/039138**

| Patent document cited in search report | | | Publication date (day/month/year) | Patent family member(s) | Publication date (day/month/year) |
|---|---|---|---|---|---|
| JP | 2018-14199 | A | 25 January 2018 | (Family: none) | |
| JP | 2017-188219 | A | 12 October 2017 | (Family: none) | |
| JP | 4894969 | B1 | 14 March 2012 | US 2013/0078520 A1 paragraph [0149] WO 2012/169083 A1 EP 2557068 A1 CN 102884659 A KR 10-2013-0009739 A | |
| JP | 2012-252964 | A | 20 December 2012 | (Family: none) | |
| JP | 2017-50056 | A | 09 March 2017 | (Family: none) | |
| JP | 2020-173968 | A | 22 October 2020 | (Family: none) | |
| JP | 2021-5474 | A | 14 January 2021 | US 2022/0359860 A1 paragraphs [0099]-[0103] WO 2020/262264 A1 EP 3993102 A1 CN 114026715 A | |
| JP | 2020-4506 | A | 09 January 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016189320 A

- JP 2022175165 A